(19) Europäisches Patentamt / European Patent Office / Office européen des brevets

(11) **EP 2 899 676 A1**

(12) **EUROPEAN PATENT APPLICATION**

(43) Date of publication:
29.07.2015 Bulletin 2015/31

(51) Int Cl.:
*G06Q 10/00* (2012.01)    *G06Q 10/06* (2012.01)

(21) Application number: 15150822.3

(22) Date of filing: 12.01.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 13.01.2014 US 201414153317

(71) Applicant: Simmonds Precision Products, Inc.
Vergennes, VT 05491 (US)

(72) Inventors:
• Dion, Bernard
Monkton, VT 05469 (US)
• Sopko, Richard Joseph
South Burlington, VT 05403 (US)

(74) Representative: Leckey, David Herbert
Dehns
St Bride's House
10 Salisbury Square
London
EC4Y 8JD (GB)

(54) **Remaining useful life forecasting system**

(57) The present disclosure relates to a method to a remaining useful life forecasting system. The system comprises a combination of hardware and software, configured to calculate the Remaining Useful Life (RUL) of a part. The system may be configured to receive as input, information characterizing the part's engineering design (geometry, material, design loads), actual measurements of the part's historical degradation profile, estimates of the part's forecasted loading usage, and approximations of the part's remaining structural load carrying capacity.

FIG. 1

**Description**

FIELD

The present disclosure relates to the determining of a remaining useful life of a part or piece of equipment.

BACKGROUND

Often times, a lack of information is available to decision makers for efficient planning of upcoming equipment dispatch and spare part inventory. For instance, information detailing the amount of time remaining before a part or parts in the equipment undergo failure such that the equipment can no longer perform its function is traditionally absent. This time remaining is referred to as a part's Remaining Useful Life (RUL). RUL is considered a prognostic function.

SUMMARY

The present disclosure relates to a method and/or computer-based system configured to determine a remaining useful life of a part. According to various embodiments, the method may comprise receiving by a planning and usage module of a computer based system, at least one of usage plans and usage reports of a part. The method may comprise receiving by a sensing module of the computer based system, measurement data via sensors associated with the part. The method may comprise receiving by an observation recording activity module of the computer based system, recorded observable phenomena associated with the part. The method may comprise receiving by a characteristic module of the computer based system, data associated with the material properties of the part.

According to various embodiments, the method may include receiving at least one of part characteristic data; historical degradation measurements of the part, estimates of the part's forecasted loading usage, and approximations of the remaining structural load carrying capacity of the part. This information may be correlated and processed. The method may include calculating the remaining useful life of the part.

BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.

FIG. 1 depicts a process flow of a system described herein in accordance with various embodiments; and
FIG. 2 depicts a computer based system configured in accordance with various embodiments.

DETAILED DESCRIPTION

The detailed description of exemplary embodiments herein makes reference to the accompanying drawings, which show exemplary embodiments by way of illustration and their best mode. While these exemplary embodiments are described in sufficient detail to enable those skilled in the art to practice the disclosure, it should be understood that other embodiments may be realized and that logical changes may be made without departing from the scope of the disclosure. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step.

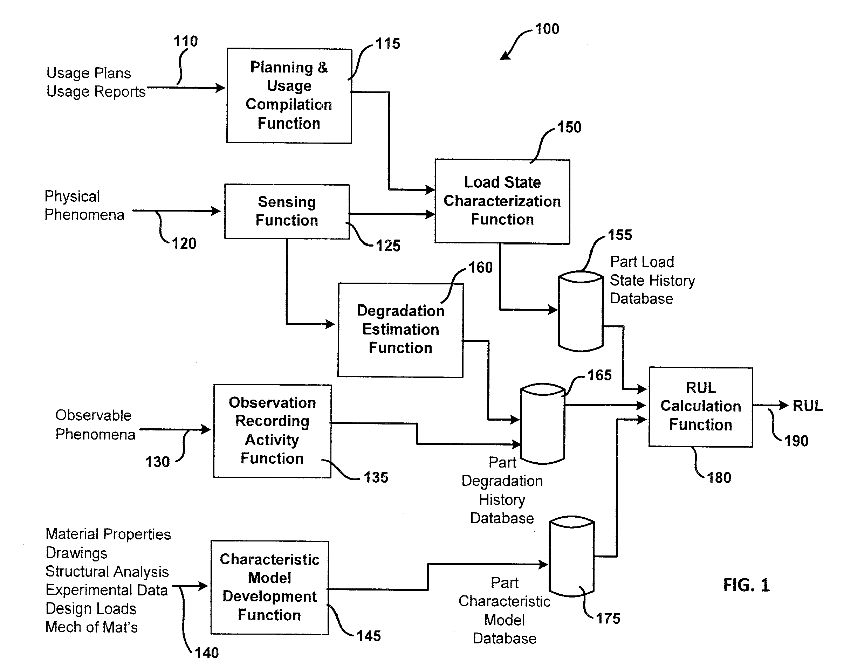

The present disclosure relates to a remaining useful life forecasting (RULF) system 100. According to various embodiments and with reference to FIG. 1, RULF system 100 comprises a combination of functional components configured to calculate the Remaining Useful Life (RUL) of a part. RULF system 100 may be configured to receive various inputs, such as information characterizing the part's engineering design (geometry, material, design loads), actual measurements of the part's historical degradation profile, estimates of the part's forecasted loading usage, and approximations of the part's remaining structural load carrying capacity. RULF system 100 comprises the systems, processors, and/or modules to integrate this data, information, and calculation functionality into one system.

RULF system 100 may be configured to store, for example, in a database a part's current level of degradation (remaining load carrying capacity), load state histories, and characteristic model information. In response to receiving a query, these databases provide the information and models used by the RUL Calculation Function to determine the current and future load carrying capacity rates of change. The mechanics of materials based equations representing these rates of change are a function of part material properties, geometry, environment (e.g. temperature), load state estimates, mechanics of materials relationships, and time. These equations are numerically integrated as a function of time until the load carrying capacity reaches a threshold indicating failure. The time elapsed from a present time to the time at which the function reaches this capacity is the RUL. The load carrying capacity rate of change equation, based on loading mode, is of the form:

$$\frac{dn}{dt} = f(n^{Mode}, f geometry, f \text{environment}, f \text{material}, F)$$

Where $n$ is the load carrying capacity, *Mode* is an exponential factor based on the loading type, $f_{geometry}$, $f_{environment}$, and $f_{material}$ are model based formulations, and F is a generalized load state. The equation for $\frac{dn}{dt}$ may be numerically integrated as a function of time until the load carrying capacity reaches a threshold indicating failure. The time at which the function reaches and/or approaches this capacity is the Remaining Useful Life (RUL) 190 of the part. This may be transmitted and/or outputted, via a display, for example, to a user.

According to various embodiments, RULF System 100 may be a combination of the following elements: computing hardware, sensor hardware, and logical modules configured to perform various processing functions. Different functions of the system can be implemented in one of, or a combination of, these elements. These elements may be integrated into the target equipment, provided on a mobile computing platform at the target equipment, or at a remote computing platform. Each function transforms data or information into information for use in another downstream function, or for use in the final RUL calculations.

The databases from which the RUL Calculation Function 180 receives data and information are the Part Load State History Database 155, the Part Degradation History Database 165, and the Part Characterization Model Database 175. These databases 155, 165, 175 are populated with data and information from supporting functions. The Part Load State History Database 155 data is generated by a Load State Characterization Function 150, which uses data and information from Planning & Usage Compilation Function 115 and a Sensing Function 125 to characterize the load history, in terms of forces and environments that a part experiences over time. The Part Degradation History Database 165 data is generated by the Degradation Estimation Function 160 and the Observation Recording Activity Function 135, which uses data from a Sensing Function 125 and an Observation Recording Activity Function 135 that record activities to record part degradation, in terms of load carrying capacity. The Part Characteristic Model Database 175 is generated using data provided by an engineering model development effort, the Characteristic Model Development Function 145, that characterizes the bulk material loss rate models in terms of engineering data and Mechanics of Material concepts.

According to various embodiments, the planning and usage compilation function 115 may be performed by a planning and usage module of a computer based system. The sensing function 125 may be performed by a sensing module of the computer based system. Observation recording activity function 135 may be performed by an observation recording activity module of the computer based system. The characteristic model development function 145 may be performed by a characteristic model development module of the computer based system.

RULF System 100 integrates various requisite elements to execute part RUL forecasting using a mechanics of materials approach. The approach may comprise one based on mechanics of material theory to approximate stress as a function of loading and structural load carrying capacity. Traditionally, the majority of approaches to forecast RUL for a part rely on and involve data-based probabilistic and statistical techniques alone. Using the model based mechanics of material approach reduces the number and scope of training datasets involved in developing the RUL technique for a given part. Assigning known values to aspects of the RUL models, such as geometric dimensions, stress concentration factors, and moduli of elasticity, reduces the sources of variability in the RUL calculations.

This approach is an improvement over other model based cyclic loading techniques, such as Paris Law, which are constrained to simple, cyclic, pseudo-constant amplitude loadings. The model based mechanics of material approach is time based, using numerical integration solution techniques, allowing for generalized amplitude and duration loadings.

The equation $\frac{dn}{dt} = f(n^{Mode}, f geometry, f \text{environment}, f \text{material}, F)$ that may be generally used to predict the rate of change of a failure condition based on a part's current failure condition and other factors such as geometry, material properties, environmental factors and the loading of the part. *n^mode* may be a current failure condition and loading type. A current failure condition may be stored in the part degradation history database 165. *fgeometry* may be associated with the Part Characterization Model Database 175. *fgeometry* may be an engineering value, such as a value calculated from the shape, lever arm, and/or form of a part. *fenvironment* may be stored in the part characteristic model database 175 and/or the Part Characterization Model Database 175. *fmaterial* may be stored

in the part characteristic model database 175 "F" may correspond with a loading stored in the part load state history database 155.

Stress experienced by a part may be a function of the geometry of the part. The material properties, including structural analysis, experimental data, design loads, and/or the mechanics of materials may be input as data 140 into the Characteristic Model Development Function 145. This data 140 may be processed through an analysis and then stored in a database, such as part characteristic model database 175 so that it can be retrieved and input into the RUL calculation function 180.

An observable phenomenon may be a data input 130 to the Observation Recording Activity Function 135. This may include a database feed where physically observed phenomena, such as lines, discoloring, bends, warps, cracks, and/or the like are observed and recorded as a function over time. This may be recorded as part of a regular maintenance and/or inspection effort.

Sensors may also input data 120 into the RULF system 100. For instance, an aspect of a physical phenomenon may be associated with a failure condition. This aspect may be a strain which grows more over time under a known loading. Analyzed sensed data 120 may be fed into Part Load State History Database 155 and/or to the part degradation history database 165.

According to various embodiments, any given part is going to experience a certain loading type over time. Each part may have different load levels over time, depending on how that part is being used. For instance in the case of a helicopter drive train, in response to experiencing different flight conditions, the helicopter drive train may see different torque levels. The different torque levels may be characterized and stored. The usage plan and usage report data 110 representing this usage over time may be input through the Usage Compilation Function 115.

A part may enter into a degradation band over time. Each degradation band may have various thresholds that a part may enter into. The functions of the RULF system 100 may be honed to account for these thresholds based on each part under inspection. In response to the databases 155, 165, 175 being populated with information which may be continually updated and/or periodically updated as the part is used, the load states, the degradation history and the engineering data are correlated together as needed with the current usage of the part. The rate of change of failure condition equation may be utilized to generate a remaining useful life value for that part.

According to various embodiments, the method may include receiving at least one of part characteristic data; historical degradation measurements of the part, estimates of the part's forecasted loading usage, and approximations of the remaining structural load carrying capacity of the part. This information may be correlated and processed. The method may include calculating the remaining useful life of the part.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more."

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments. Different cross-hatching is used throughout the figures to denote different parts but not necessarily to denote the same or different materials.

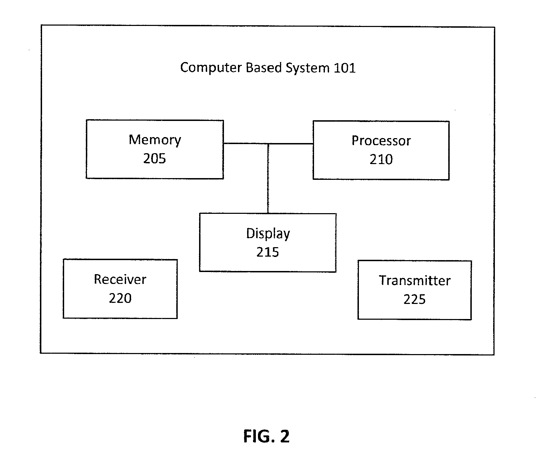

According to various embodiments and with reference to FIG. 2, the RULF system 100 described herein may be may be embodied in and/or on a computing device (e.g., processor 210) and an associated memory 205. For instance, methods described herein may be embodied in a computer-based system 101 configured to determine RUL. Memory 205 may comprise an article of manufacture including a tangible, non-transitory computer-readable storage medium having instructions stored thereon that, in response to execution by a computing device (e.g., processor 210), cause the computing device to perform various methods. The computer-based system 101 may be operatively coupled to a display 215. The computer-based system 101 may be operatively coupled to a receiver 220 and/or transmitter 225 for the transfer of data, such as over a network.

In various embodiments, the embodiments are directed toward one or more computer systems capable of carrying out the functionality described herein. The computer system includes one or more processors, such as processor.

The processor is connected to a communication infrastructure (e.g., a communications bus, cross-over bar, or network). Various software embodiments are described in terms of this exemplary computer system. After reading this description, it will become apparent to a person skilled in the relevant art(s) how to implement various embodiments using other computer systems and/or architectures. Computer system can include a display interface that forwards graphics, text, and other data from the communication infrastructure (or from a frame buffer not shown) for display on a display unit.

The various system components discussed herein may include one or more of the following: a host server or other computing systems including a processor for processing digital data; a memory coupled to the processor for storing digital data; an input digitizer coupled to the processor for inputting digital data; an application program stored in the memory and accessible by the processor for directing processing of digital data by the processor; a display device coupled to the processor and memory for displaying information derived from digital data processed by the processor; and a plurality of databases. As those skilled in the art will appreciate, user computer may include an operating system (e.g., Windows NT®, Windows 95/98/2000®, Windows XP®, Windows Vista®, Windows 7®, OS2, UNIX®, Linux®, Solaris®, MacOS, etc.) as well as various conventional support software and drivers typically associated with computers.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f), unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method comprising:

   receiving, by a computer based system (101) comprising a processor (210) and a tangible, non-transitory memory (205) configured for determining a remaining useful life of a part, part characteristic data;
   receiving, by the computer based system (101), historical degradation measurements of the part;
   receiving, by the computer based system (101), estimates of the part's forecasted loading usage;
   receiving, by the computer based system (101), an approximation of a remaining structural load carrying capacity of the part;
   determining, by the computer based system (101), the remaining useful life of the part based on the an analysis of at least one of the received part characteristic data, the historical degradation measurements of the part, the estimates of the part's forecasted loading usage, the remaining structural load carrying capacity of the part; and
   displaying, by the computer based system (101), the determined remaining useful life of the part via a display (215).

2. The method of claim 1, wherein the determining the remaining useful life of the part further comprises processing the equation: $\frac{dn}{dt} = f(n^{Mode}, f geometry, f \text{environment}, f \text{material}, F)$, where $\frac{dn}{dt}$ is remaining structural load carrying capacity, $n$ is the load carrying capacity, *Mode* is an exponential factor based on the loading type, $f_{geometry}$, $f_{environment}$, and $f_{material}$ are model based formulations, and F is a generalized load state.

3. The method of claim 2, wherein $n^\wedge mode$ is associated with a current failure condition and loading type.

4. The method of claim 2 or 3, wherein *fgeometry* is an engineering value.

5. The method of claim 2, 3 or 4, wherein F is associated with a loading of the part.

6. The method of any of claims 2 to 5, wherein the equation for $\frac{dn}{dt}$ may be numerically integrated as a function of time until the remaining structural load carrying capacity reaches a threshold indicating failure.

7. The method of claim 6, wherein a time at which the function reaches threshold indicating failure is the remaining useful life of the part.

8. The method of any preceding claim, wherein the historical degradation measurements comprise at least one of a remaining load carrying capacity, a load state history, and a characteristic model information of the part.

9. The method of any preceding claim, wherein the part characteristic data is accumulated at least in part via manual inspection.

10. The method of any preceding claim, further comprising receiving, by the computer based system (101), load usage reports detailing a use of the part over time.

11. The method of any preceding claim, wherein the part characteristic data further comprises at least one of geometry data of the part, material data of the part, and design loads of the part.

12. The method of any preceding claim, wherein the received part characteristic data, the historical degradation measurements of the part, the estimates of the part's forecasted loading usage, the remaining structural load carrying capacity of the part is aggregated.

13. A method comprising:

receiving, by a planning and usage module of a computer based system (101) comprising a processor and a tangible, non-transitory memory (205), at least one of a usage plan and a usage report of a part;
receiving, by a sensing module of the computer based system (101), measurement data via a sensor associated with the part;
receiving, by an observation recording activity module of the computer based system (101), a recorded observable phenomenon associated with the part;
receiving, by a characteristic module of the computer based system (101), data associated with a material property of the part; and
determining, by the computer based system (101), a remaining useful life of the part.

14. The method of claim 13, wherein the data associated with the material property of the part comprises at least one of geometry data of the part, material data of the part, and design loads of the part.

15. The method of claim 13 or 14, wherein the determining the remaining useful life of the part further comprises processing the equation:

$$\frac{dn}{dt} = f(n^{Mode}, f{geometry}, f{environment}, f{material}, F),$$

where $\frac{dn}{dt}$ is remaining structural load carrying capacity, $n$ is the load carrying capacity, $Mode$ is an exponential factor based on the loading type, $f_{geometry}$, $f_{environment}$, and $f_{material}$ are model based formulations, and F is a generalized load state.

100

110 Usage Plans
Usage Reports

115

Planning &
Usage
Compilation
Function

150

Load State
Characterization
Function

155 Part Load
State History
Database

120 Physical
Phenomena

125

Sensing
Function

160

Degradation
Estimation
Function

165 Part
Degradation
History
Database

180

RUL
Calculation
Function

190 RUL

130 Observable
Phenomena

135

Observation
Recording
Activity
Function

140 Material Properties
Drawings
Structural Analysis
Experimental Data
Design Loads
Mech of Mat's

145

Characteristic
Model
Development
Function

175 Part
Characteristic
Model
Database

FIG. 1

Computer Based System 101

Processor 210

Memory 205

Display 215

Transmitter 225

Receiver 220

**FIG. 2**

Europäisches
Patentamt

European
Patent Office

Office européen
des brevets

# EUROPEAN SEARCH REPORT

Application Number

EP 15 15 0822

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/005186 A1 (GOEBEL KAI FRANK [US] ET AL) 6 January 2005 (2005-01-06) * the whole document * ----- | 1-15 | INV. G06Q10/00 G06Q10/06 |

TECHNICAL FIELDS
SEARCHED        (IPC)

G06Q

The present search report has been drawn up for all claims

| Place of search | Date of completion of the search | Examiner |
|---|---|---|
| Munich | 29 May 2015 | Gardiner, Alexander |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

................................................................

& : member of the same patent family, corresponding
  document

EPO FORM 1503 03.82 (P04C01)

**ANNEX TO THE EUROPEAN SEARCH REPORT
ON EUROPEAN PATENT APPLICATION NO.**

EP 15 15 0822

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2015

| Patent document cited in search report | Publication date | Patent family member(s) | Publication date |
|---|---|---|---|
| US 2005005186    A1 | 06-01-2005 | CA      2470687  A1<br>MX   PA04006254  A<br>US    2005005186  A1 | 23-12-2004<br>31-03-2005<br>06-01-2005 |

EPO FORM P0459

For more details about this annex : see Official Journal of the European Patent Office, No. 12/82